# EUROPEAN PATENT APPLICATION

(11) **EP 0 945 521 A1**
(43) Date of publication of application: **29.09.1999**
(21) Application number: 98830181.8
(22) Date of filing: 26.03.1998
(51) Int. Cl.: C21D 9/56, B21C 1/14, B21C 9/00

(54) **A continuous process for obtaining metal wires and a plant for actuation of the process**

(71) Applicant: SO.CO.IT. S.r.l., 64027 S. Omero (TE) (IT)
(72) Inventor: Cavatorta, Francalberto, Borgo Chiozza (PR) (IT); Lisciani, Giulio, 63013 Grottamare (AP) (IT); Sella, Gianni, 10082 Cuorgne' (TO) (IT)
(74) Representative: Gotra, Stefano

(57) **Abstract**

The invention relates to a continuous process for obtaining metal wire and a plant for actuating the process. The process comprises at least one wire (3) winding phase on to a driven spool (2), followed by an unwinding phase of the wire so that it can be sent on to subsequent work operations. There is also a reheating phase of the drawn wire in which parasitic currents are induced on the wire while it is wound on the spool (2). The plant for carrying out the process comprises a drawing plate (1) for reducing the wire section, a driven spool (2) on which the wire winds and then unwinds to be sent on to subsequent plant operations, and a furnace for reheating the drawn wire. The furnace comprises a solenoid (5) crossed by an alternate current, which induces parasitic currents in the wire (3) wound on the first spool (2). Preferably the current crossing the solenoid (5) is of a high-frequency type and the solenoid envelops the first spool (2).

## Description

Specifically, but not exclusively, the inventions can be used to obtain metal wires, beginning from rods or bars which are then subjected to one or more drawing processes.

In particular, the invention relates to processes and plants in which after each operation the rods are wound on spools or drums. These types of plants are used, for example, in iron wire-drawing processes.

Continuous processes and plants for making metal wires are well known in the art, especially those for drawing iron wire. In these processes, bars or rods generally produced by hot-rolling, are subjected to one or more drawing processes, which consist in substance in forcing the wire to pass through a shaped extruder, which in a cold-forming process reduces the diameter of the rod. Since for each drawing operation about a 30% reduction in the rod diameter is achieved, more than one such operation is necessary, the final number obviously depending on the target diameter.

As the process continues, the wire exiting from the extruder becomes gradually more resistant to further deformation. For this reason it is very often necessary to subject the wire to reheating (known processes consisting in a reheating of the wire to a predetermined temperature and for a predetermined time, following by a cooling process) in order to re-establish ductility.

A reheating process is in any case necessary at the end of the drawing process if a ductile wire is required, as reheating eliminates the internal tensions in the wire material.

Plants for carrying out the above-described process, especially those for continuously producing a soft wire, comprise one or more extruders, with progressively-decreasing section, through which the wire is made to pass. After each extrusion, a motorized spool, which usually rotates about a vertical axis and exhibits a truncoconical shape, imparts on the wire the traction necessary to make it pass through the extruder. The wire winds on this spool, sometimes known as a capstan, from bottom to top and rising on a single layer arranged on the lateral surface of the spool. The wire is then unwound from the spool at the top end thereof and sent on to various working processes.

After the final spool, and often between two intermediate spools in the case of several extruders in succession, there is a tunnel furnace, in which a constant temperature is maintained by known means, for reheating the wire. The temperature is calculated so that by the time the wire exits the furnace it is at the right temperature for further extrusion operations.

Drawing plants are often set in various side-by-side lines so that several wires can be produced contemporaneously: thus, several wires, arranged parallel one to another, pass into the furnace and production is consequently improved while containing the running costs and the mass of the whole operational plant.

In order that the wires can pass at a good speed, giving good plant production, the tunnel furnaces have to be large - in fact, it is obvious to say that they are the most massive part of the entire plant. Also, obviously, the furnaces are the most expensive element to maintain, both in terms of capital investment and in running costs.

The reheating process can also be carried out by locating spools inside the actual furnace, usually bell-shaped, in which the mass of wire is heated to the correct temperature. Apart from the cost of the plant, there is also the drawback that a long time is needed, several hours in fact, to carry out the reheating operation. This type of kiln is also not very practical in the case of intermediate reheating, inasmuch as it interrupts the continuity of the process.

The present invention obviates the above-mentioned drawbacks in the prior art, in a way which is both econocmical and simple.

One advantage of the invention is that it reduces plant operations and costs for obtaining a ductile reheated wire.

A further advantage of the invention is that it reduces the plant operations and costs necessary in order to obtain considerable reductions in the wire section.

A still further advantage is die rapidity, with respect to the prior art, with which the plant can be stopped and restarted.

These aims and advantages and others besides are all attained by the invention as it is characterised by the claims which follow.

Further characteristics and advantages of the present invention will better emerge from the detailed description that follows of a preferred but non-exclusive embodiment of die invention, illustrated purely by way of a non-limiting example in the accompanying figures of the drawings, in which:
figure 1 shows a schematic vertical elevation of a plant made according to the invention;

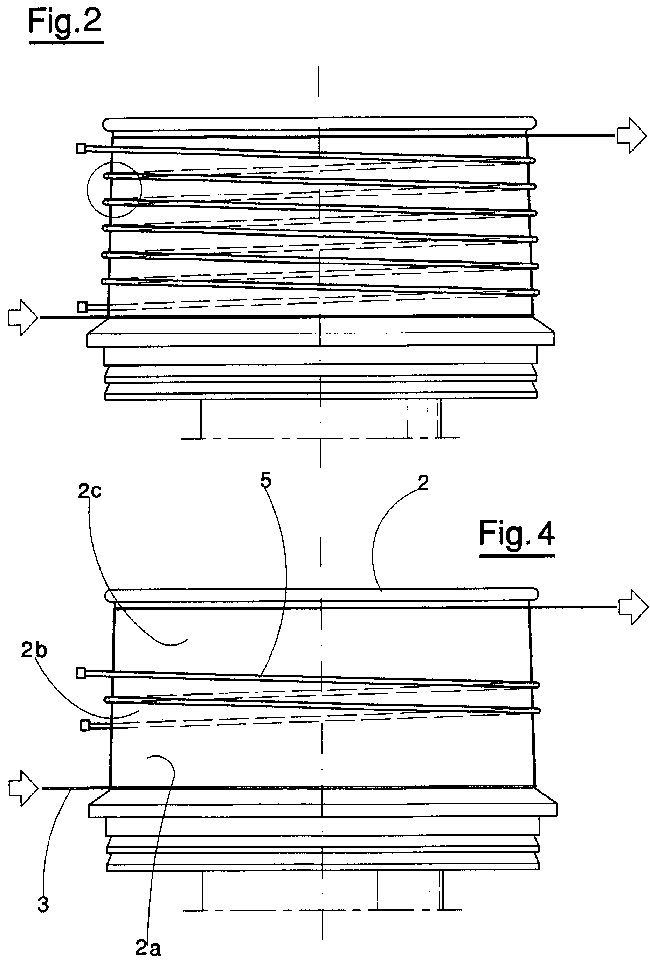

figure 2 shows an enlarged scale view of a detail of the plant of figure 1, relating to the first spool;
figure 3 shows a much-enlarged scale view of a zone (circled) of figure 2 relating to the lateral surface of the spool on which the wire is wound;
figure 4 shows an enlarged scale view of a detail of the plant of figure 1, relating to the first spool, with a different solenoid arrangement.

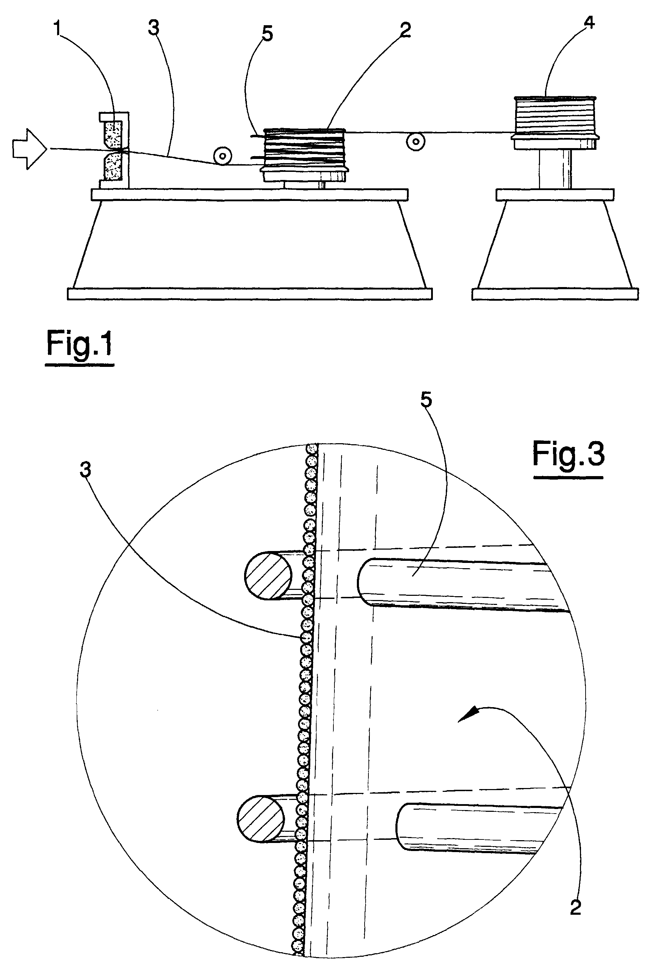

Figure 1 schematically illustrates a plant for the continuous production of metal wires according to the invention. The plant comprises an extruder 1 of known type, through which a wire 3, for example a steel wire, is made to pass with the intention of reducing the section thereof. Like in known-type plants, the workpiece entering the extruder can be a rod or bar, or even an already-extruded wire destined for further reduction.

A first spool 2, driven to rotate about an axis thereof, provides the wire with the traction necessary to cause it to pass through the extruder. The wire is wound on the spool 2 as it exits from the extruder. Subsequently, and continuously, the wire unwinds from the spool 2 to be sent on to other elements of the plant.

Also as in known-type plants, the spool 2 (also known as a capstan) exhibits a slightly truncoconical shape so that, following the rotation of the spool, the wire winds in a direction starting from the bottom thereof and proceeding upwards in a single file arranged on the lateral surface of the spool; the wire is then unwound from die upper zone of the spool. The arrangement of the wire on the lateral surface of the spool can clearly be seen in figure 3.

The plant further comprises a furnace for the reheating of the drawn wire which, in the embodiment shown in the figures, comprises a solenoid 5, through which a high-tension alternate current passes, which solenoid envelops the first spool 2. The solenoid 5 exhibits an internal diameter which varies according to the variations in the external diameter of the first spool (that is, it also exhibits a truncoconical shape). The internal diameter of the solenoid 5 is such that the raidal distance between the coils of the solenoid 5 and those of the wire wound on the first spool are reduced to a minimum. The dimensions of the solenoid 5, however, must be such as to prevent contact between the coils of the solenoid 5 and the wire wound on the spool.

Preferably the spool 2 is made of diamagnetic material, for reasons that will become clear hereinafter.

The plant illustrated comprises (apart from the spool 4, a point which will be clarified hereinbelow) one spool only 2; it is, however, obvious that the plant can be provided with a plurality of parallel spools in side-by-side operation; indeed, for each wire being extruded, the plant might contain two or more spools, of the same type as spool 2, in series, so as to carry out successive drawing operations.

With the described plant, the process of the present invention can be actuated, which invention includes, apart from the known phases of wire drawing, the winding of the wire on the first driven spool 2 and its subsequent unwinding, a phase (in itself, known) of reheating of the wire in order to eliminate the internal tensions of the material, which is completely new with respect to the prior art processes. The wire reheating phase is carried out by inducing parasitic currents into the wire (Foucault currents) while the wire is wound on the first driven spool. In particular, with the illustrated plant, these parasitic currents are induced by high-frequency alternate currents circulating in the solenoid.

Since, as in well-known, the intensity of the parasitic currents (which governs the quantity of heat generated in the wire and, resultingly, the temperature reached by the wire) increases with the increase of the current frequency, it is sufficient to regulate the frequency in order to obtain the temperature necessary for reheating the drawn wire, which is of course the temperature required to eliminate the internal tensions in the material forming the wire.

With respect to the prior art processes, which provided for reheating inside tunnel furnaces, the process and the plant of the present invention enable high reheating process speed and considerable heat energy saving in that the areas of the plant which have to be kept hot are reduced, as is the reheating zone itself, and as a result so is the entire structure destined to contain the plants.

With respect to known processes, which perform the reheating inside bell-type furnaces, the process and the plant of the present invention lead to considerable savings in terms of plant construction and running, as well as the continuity of plant functioning, and a further considerable saving in the times necessary to carry out the reheating operation.

The process of the invention in the preferred embodiment is actuated with the induction phase of the parasitic currents being effected by means of high-frequency electrical currents.

It is however possible to use a low-frequency induction system in which the parasitic currents are generated by a device similar to an electric transformer in which the secondary winding, when the parasitic currents are generated, has very few coils (often one only) while the primary winding has many coils and is crossed by currents at industrial frequency (50Hz).

In this case the plant will be made in such a way that the mass of wire wound on the spool behaves as a single coil (secondary) wound about a commutator about which a primary winding is made, with a predetermined number of coils.

In experiments it has been found that high-frequency induction gave good results in combination with a spool made of diamagnetic material, so that the generation of heat-creating parasitic currents does not occur in the spool itself.

In low-frequency inductions, it is possible to use a spool provided with a conducting lateral surface, so that the surface heats up and transfers heat to the wire wound on the spool by simple conduction. It is, however, more difficult to regulate the temperature in the wire using this method.

The driven spool might be arranged differently, for example with a horizontal axis or with the conical part developing downwards rather than upwards. In such a case the wire winding would occur at the top and the unwinding at the bottom, so that the force of gravity would facilitate the winding of the wire about the spool lateral surface, even where the degree of cone angle were small.

The described method simply and effectively prepares the hot wire, exiting from a reheating process, for a stretching operation, which can be achieved by rewinding the wire on a second driven spool 4 having a peripheral rotation velocity which is greater than the peripheral velocity of the first spool 2.

Obviously the difference between the two peripheral velocities will be determined in such a way as to subject the wire, in passing from the first to the second spool, to a predetermined stretching force. Figure 1 schematically shows a plant for carrying out this stretching phase and comprises a second spool 4 which, by rotating faster than the first spool 2 (or having a greater diameter) causes the wire to stretch.

This stretching phase is facilitated by the subdivision of the spool into three zones, namely zones 2a, 2b and 2c, one above the other going in an axial direction, with the solenoid 5 enveloping only the central zone 2b, as shown in figure 4. In zone 2c, which follows zone 2b in the winding direction of the wire, cooling means could be provided, of known type and not illustrated in the figure, for cooling zone 2c and therefore also cooling the part of the wire which is wound on zone 2c.

The parasitic currents are therefore induced only on the part of the wire wound on the central zone 2b of the first driven spool 2, while the part of the wire wound on zone 2c is cooled. Thus, by carefully regulating the cooling temperature, which will bring the wire down to a temperature which is cooler than in zone 2b but not room temperature, the subsequent wire stretching operation is facilitated. The first zone, 2a, favours the winding of the wire about the lateral wall of the spool, a procedure sometimes made difficult if the temperature of the wire is close to reheating temperature.

Obviously this placing of the solenoid in the central zone 2b of the spool and of cooling means in the upper zone 2c can be adopted even where there is no subsequent wire stretching operation.

## Claims

1. A continuous process for obtaining metal wires, comprising:
at least one drawing process performed on a metal rod in order to obtain a reduction in the section thereof,
at least one wire (3) winding phase on to a first driven spool (2), which imparts on the wire the traction necessary to make it pass through the drawing plate (1) and an unwinding phase of said wire so that the wire can be sent on to subsequent work operations;
at least one wire reheating phase in order to eliminate internal tensions in the material making up the wire;
characterised in that the reheating phase of the drawn wire is carried out by inducing parasitic currents in the wire while said wire is wound on said first driven spool (2).

2. The process of claim 1, characterised in that the parasitic currents in the wire wound on the first driven spool (2) are induced by high-frequency alternate currents.

3. The process of claim 1, characterised in that it comprises a stretching phase of the hot wire exiting from said reheating phase.

4. The process of claim 3, characterised in that the stretching phase comprises a rewinding of the wire on a second driven spool (4) which second spool (4) exhibits a greater peripheral rotation velocity than a peripheral rotation velocity of said first driven spool (2); a difference between the two peripheral rotation velocities being determined in such a way as to subject the wire, in passing from the first spool (2) to the second spool (4), to a predetermined stretching force.

5. The process of claim 1, characterised in that it comprises two or more of said reheating phases, each of which phases is carried out on a different spool.

6. The process of claim 1, characterised in that the parasitic currents are induced only on a part of said wire which is wound on a central zone (2b) of said first driven spool (2).

7. The process of claim 6, characterised in that a cooling phase of the wire is carried out in a zone (2c) of the first driven spool (2) which follows said central zone (2b), proceeding in a winding direction of said wire.

8. The plant for continuous production of metal wires of claim 1, comprising:
at least one drawing plate (1) for reducing a section of the wire (3);
at least a first driven spool (2) which imparts on the wire a traction necessary for it to pass through said drawing plate (1), on which first spool (2) the wire first winds and thereafter unwinds to be sent on to subsequent working phases;
at least one furnace for reheating said drawn wire;
characterised in that said furnace comprises a solenoid (5) through which an alternate current runs, which induces parasitic currents in the wire (3) wound on said first spool (2).

9. The plant of claim 8, characterised in that said solenoid (5) is crossed by a high-frequency alternate current and winds about said first spool (2).

10. The plant of claim 8, characterised in that said solenoid (5) exhibits an internal diameter which varies according to a variation in an external diameter of said first spool (2), in order to reduced to a minimum a radial distance between coils of the solenoid (5) and coils of the wire as it is wound on to said first driven spool (2).

11. The plant of claim 8, characterised in that said first driven spool (2) is made of a non-electric current-conducting material.

12. The plant of claim 8, characterised in that it comprises a second driven spool (4), on which the wire (3) winds when hot and in arrival from said first driven spool (2); said second spool (4) exhibiting a peripheral rotation velocity which is greater than a peripheral rotation velocity of said first driven spool (2); a difference between said peripheral rotation velocities being calculated in order that the wire, passing from said first driven spool (2) to said second driven spool (4), is subjected to a predetermined stretching force.

13. The plant of claim 8, characterised in that said solenoid (5) envelops only a central part (2b) of said first spool (2).

14. The plant of claim 13, characterised in that it comprises known-type means for cooling a zone (2c) of said first driven spool (2) which zone (2c) follows said central zone (2b) in a wire winding direction of said wire on said spool (2).
